# EUROPEAN PATENT APPLICATION

(11) **EP 2 960 051 A1**
(43) Date of publication of application: **30.12.2015**
(21) Application number: 14461548.1
(22) Date of filing: 27.06.2014
(51) Int. Cl.: B32B 5/02, H05K 3/46, B29C 70/34

(54) **Method of preparing multilayer material for commerical stands production, multilayer material for commerical stands production and joint made of this material**

(71) Applicant: Kowalewski Sp. z o. o., 98-200 Sieradz (PL)
(72) Inventor: Kowalewska, Aleksandra, 98-200 Sieradz (PL)
(74) Representative: Rumpel, Alicja

(57) **Abstract**

The manner of production of layered material for manufacturing advertising stands, characterized in that at least two rigid, symmetrical, perforated or notched panels (1,2) or tape and highly durable aramid reinforcing fabric (3) soaked with flexible resin are permanently connected under a pressure of 4-6 bar and simultaneously the rigid and symmetrical elements and the fabric (3) soaked with resin is heated to at least 100°C.

Layered material for manufacturing advertising stands characterized in that it contains at least two rigid, symmetrical panels (1,2) which permanently connected with highly durable aramid reinforcing fabric (39 soaked with resin.

A connector from layered material for manufacturing advertising stands characterized in that it contains at least four rigid panels that are laid in pairs above and under reinforcing fabric soaked with flexible resin, with an aperture between the facing edges of trapezoid panels of the thickness of two panels and their binding interlayer of reinforcing fabric soaked with flexible resin.

## Description

The subject of this invention is the manner of production of layered material for manufacturing advertising stands.

Advertisements are currently presents in every sphere of the space that surrounds us. Advertisements in other forms than multimedia are usually banners, posters or advertising stands. Due to their direct contact with the potential buyer of the displayed merchandise, the latter must meet several basic assumptions. First of all, they must bear the load of the displayed merchandise and they must be executed esthetically. Moreover, they should be easy to transport and store, and their costs of manufacture should be sufficiently low, as to allow for their modification after the conclusion of a promotional campaign and for the purposes of a new advertising campaign, or easily disposed of.

The simplest forms of advertising stands of various types are stands, such as the one as per patent claim number PL342198, in which two triangular panels are supported by a triangular base supporting structure. The panels are mounted to the base using special mounting rings, and the panels themselves must be made of rigid material in order to provide sufficient load-bearing capacity. The stand may be transported after demounting as legs, shelves and mounting rings, which often assumes losing elements of the stand, usually the mounting rings, as well as problems with assembling the stand correctly in the display location.

An advertising stand in the form of display module according to patent claim number PL 209489 comprises three sections connected in the corners. These sections are spatial forms, and, additionally, the internal space of the module formed by their connection may be occupied by shelves. The spacious character of the sections requires more space during transport, which raises the costs of transport of the stands.

Similar difficulties with logistics occur in the case of advertising racks, which, although are generally disassembled, usually are of considerable size, even in the disassembled position.

An alternative for structures of this type are advertising stands made of cardboard, usually corrugated. Cardboard allows for applying any information on the stand surface, makes them light, which reduces the cost of transport. Unfortunately, apart from a series of advantages, corrugated cardboard is liable to biological corrosion and is not resistant to humidity, which considerably reduces its time of use. It is not able to carry high loads. The load-bearing capacity of cardboard stands decreases drastically in the event of humidity or flooding of the stand, for instance in result of a leak of liquids presented on the stand, such as cosmetic liquids, or casual washing of the floor next to the stand. At the same time, through multiple assembling and disassembling, cardboard is liable to damages of sockets connecting particular elements, which makes them unstable, and often prevents further correct assemblies.

Therefore, the purpose was to develop a material that would be resistant to weather conditions, which would allow for reducing the necessary transport space while maintaining the durability parameters corresponding to advertising racks or modules made of rigid materials, as well as a material which would allow for designing and realizing an advertising stand with a minimum amount of independent parts, which would unfold automatically. These conditions are observed by the material used for manufacturing advertising stands obtained in the method of producing layered material for manufacturing advertising stands and a connector from the layered material for manufacturing the advertising stands according to the invention.

The manner of production of the layered material for manufacturing advertising stands is characterized in that at least two rigid, symmetrical, perforated or notched elements in the form of panels or tapes and highly durable reinforcing fabric, particularly aramid are permanently connected in an autoclave in the process of flexible resin lamination, in particularly using polyurethane, silicone, rubber resin in the presence of vacuum. Prior to placing it in the autoclave, the reinforcing fabric is soaked with resin in the amount corresponding to the fabric weight, counted in g per m² of fabric surface. In a beneficial embodiment of the invention, the rigid panels are made of aluminum, steel sheet metal or rigid plastic, or a wood-based agglomerated material, and their surface is notched, creating apertures or perforations. In the case of applying rigid and symmetrical panels, the panels are connected and the reinforcing fabric is soaked with resin so that the notches and perforations of the rigid surfaces of the panels are located opposite one another (overlapping). The layered material obtained is tightly sealed in a bag made of durable foil or silicone plates and placed in an autoclave, where air is firstly removed from the space inside and outside the bag using vacuum, and then the external space surrounding the product is filled with compressed air to produce 4 to 6 bar pressure. After the process of removing air and applying pressure is completed, the layered material is heated to reach a temperature enabling full polymerization of the flexible resin, however, this temperature must equal or exceeding 100°C. For polyurethane resins, the temperature is raised to at least 160°C, and the time of heating is at least 25 minutes. The applied thermal treatment allows for obtaining thermal resistance of the flexible resin above 100°C. It is essential when the material for the stand is painted black and is exposed to direct sunrays. Then, the layered material is removed from the autoclave, after which the shapes used for constructing the stand are cut out. According to the former perforations and notches, the lines bend while maintaining sufficient load-bearing capacity.

The connector is made in an identical way, applying an identical technology, out of layered material for manufacturing advertising stands. However, according to the invention, the connector is cut out of layered material obtained applying the method according to the invention, after it is removed from the autoclave or, in the case of manufacturing layered material according to the invention, in a continuous manner after completing the stage of material heating through imprint or dying. The primary shape of the connector is close to two trapezoids directed towards one another with their shorter bases, and their sharp-angled corners (angles) are rounded.

In another embodiment according to the invention, the manner of production is continuous. In such case, at least four tapes made of aluminum, steel sheet metal or rigid plastic, or a wood-based agglomerated material are joined in a continuous manner, whereas, in conducting the method according to the invention, the tape is laid so that each pair of tape strips lies symmetrically - one atop another. Tape made of rigid material is unrolled from at least four rollers placed symmetrically one above another, and all pairs have a span of at least two tape thicknesses and a binding interlayer. Simultaneously to unwinding the tape, reinforcing fabric is introduced between the upper and lower tape made of rigid material. The reinforcing fabric is preferably aramid, soaked with flexible resin. The fabric is soaked with the resin when conducted between two drums, through which the resin is applied. The amount of resin is adjusted as to correspond to the weight of the fabric, counted in g per m² of fabric surface. The resulting prepared and jointed components are placed in the pressing section, where they are pressed with rotating rollers, through which they are permanently joined. The pressure of the rollers is 4 to 6 bar. The rollers are heated, and their temperature is adjusted so that the mutual correlation of rotational speed and the temperature of the rollers lead to heating the heated and pressed material up to at least 100°C, and in the case of applying polyurethane resins, the temperature, to which the pressed material is heated, must be at least 160°C. The effect of a process conducted this way is layered material for manufacturing advertising stands in the form of tape, out of which elements of advertising stands are then cut out. These elements consist of at least four rigid elements connected with reinforcing fabric and flexible resin. The apertures created in between vertical panel pairs allow for bending the opposite rigid elements. Elements of advertising stands and connectors of desired shape are then cut out of layered material for manufacturing advertising stands, produced in this method.

The layered material for manufacturing advertising stands according to the invention has the form of laminate and comprises at least two rigid panels connected with reinforcing fabric and flexible resin. In a beneficial embodiment of the invention, at least two panels have notches or perforations in their surfaces, allowing for bending the panels. The layered material for manufacturing advertising stands according to the invention may also take the form of at least two panels jointed with the connecting reinforcing fabric. When the stand cannot be designed using one multiple-joint element, then several elements joined with connectors must be used. At least one edge of the rigid board is equipped with at least one socket for the connector. The connector socket is trapezoid as to correspond to the shape of the external edges of the connector in such a way that, when pulled out of the socket along the rigid panel, the connector is locked.

The connector according to the invention comprises four rigid panels, laid in pairs, one atop another and joined with reinforcing fabric soaked with flexible resin. An aperture of the thickness of two panels and their binding interlayer is formed between two pairs of panels, as to allow for free bending of the connectors for manufacturing advertising stands. The primary shape of the rigid panels is close to two trapezoids directed towards one another with their shorter bases, and their sharp-angled corners (angles) are rounded. The shape of the connectors corresponds to the shape of the sockets in the rigid panels made of layered material according to the invention. Connector sockets are preferably cut out through milling from at least one rigid panel with the manual milling machine in a single milling performed along the line resembling a trapezoid with rounded corners. The resulting edge of milling of at least one rigid panel corresponds to the shape of the external trapezoid connector panel form. The depth of milling corresponds to the connector thickness. In a beneficial embodiment of the invention, at least one rigid panel is milled in its entire thickness.

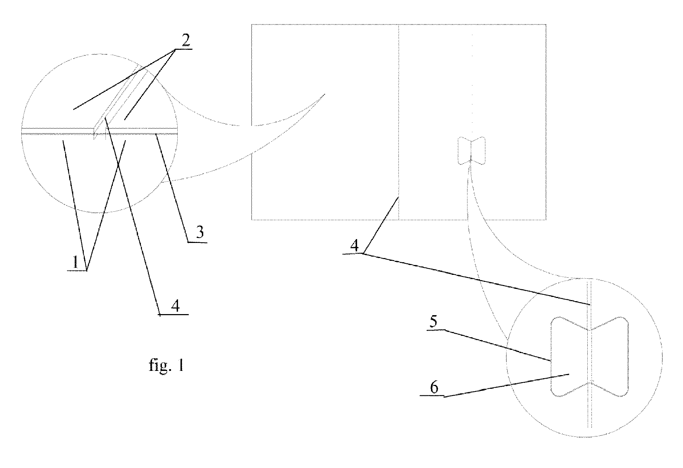

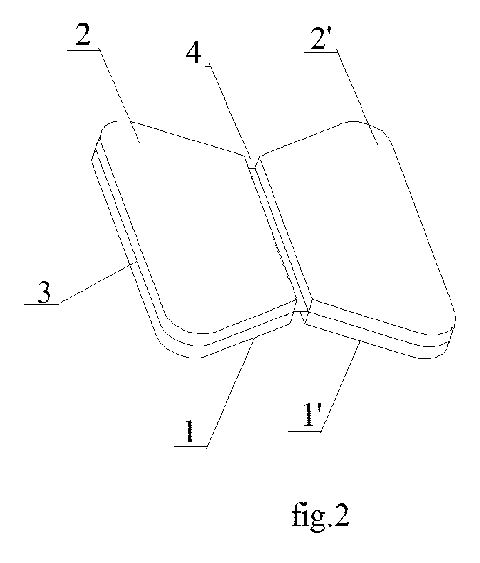

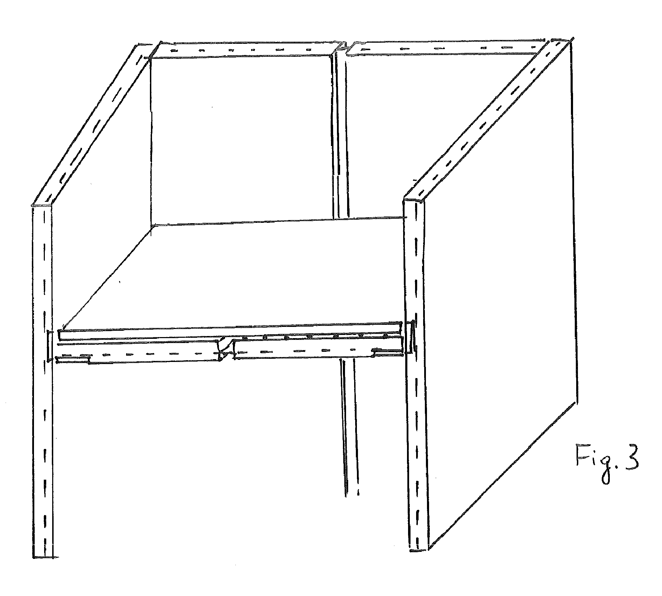

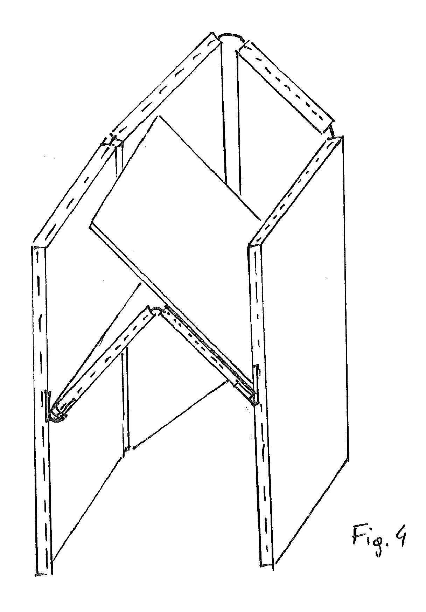

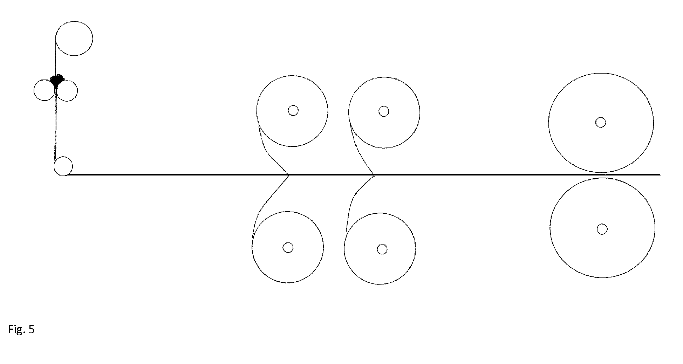

The layered material for manufacturing advertising stands and a layered material hinge for manufacturing advertising stands obtained in the method of manufacturing layered material for manufacturing advertising stands according to the invention are presented in the figure, in which fig. 1 presents the structure of the material according to the invention, fig. 2 presents the hinge connector according to the invention, fig. 3 presents the sheets of material according to the invention, linked by the connector and assembled into a model advertising stand, and fig. 4 presents a model advertising stand during assembly.

### Example I

The manner of production of the layered material for manufacturing advertising stands is characterized in that at least two rigid, symmetrical, perforated or notched panels 1 and 2 and highly durable reinforcing fabric 3, particularly aramid are permanently connected in the process of flexible resin lamination in the presence of vacuum. Prior to placing it in the autoclave, the reinforcing fabric 3 is soaked with resin in the amount corresponding to the fabric 3 weight, counted in g per m² of fabric surface. The rigid panels are made of rigid material, and their surface is notched, creating apertures and/or perforations 4. Then the panels 1 and 2 are linked and the reinforcing fabric 3 is soaked with resin so that the notches and perforations 4 of the surfaces of the rigid panels 1 and 2 are located opposite one another (overlapping). In the next step, the layered material obtained is tightly sealed and placed in an autoclave, where air is firstly removed from the space inside and outside the bag using vacuum, and then the external space surrounding the product is filled with compressed air to produce 4 to 6 bar pressure. After the process of removing air and applying pressure is completed, the layered material is heated to temperature equal or exceeding 100°C for at least 25 minutes. Then, the shapes used for constructing the stand are cut out of the layered material. According to the former perforations and notches 4, the lines bend while maintaining sufficient load-bearing capacity.

In the finished elements, connector 6 sockets 5 are cut out through milling from the rigid panel 1 or 2 with the manual milling machine in a single milling performed along the line resembling a trapezoid with rounded corners. The resulting edge of milling of the rigid panel 1 or 2 corresponds to the shape of the external trapezoid connector 6 panel form, and the depth of milling corresponds to the connector 6 thickness.

The connector 6 from layered material for manufacturing advertising stands shaped in a form close to two trapezoids directed towards one another with their shorter bases, and their sharp-angled corners are rounded. The resulting connector 6, after mounting in the socket 5 milled in the panel 1 or 2 from the layered material according to the invention is automatically locked. The connectors 6 comprise four rigid panels 1, 1' , 2 and 2' laid in pairs, one atop another, joined by reinforcing fabric 3 soaked with flexible resin. An aperture of the thickness of two panels and their binding interlayer is formed between two pairs of panels, as to allow for free bending of the connectors for manufacturing advertising stands

### Example II

The manner of production of layered material for manufacturing advertising stands conducted in a continuous process, characterized in that at least four tapes unrolled from rollers corresponding in the end of the method to panels 1, 1', 2 and 2', made of rigid material and aramid fabric 3 soaked with resin are joined. The tape is laid so that each pair of tape strips lies symmetrically - one atop another. Tape made of rigid material is unrolled from at least four rollers placed symmetrically one above another, and all pairs have a span of at least two tape thicknesses and a binding interlayer. Simultaneously to unwinding the tape, reinforcing fabric 3 soaked with flexible resin is introduced between the upper and lower tape made of rigid material. The amount of resin is adjusted as to correspond to the weight of the fabric, counted in g per m² of fabric surface. The resulting prepared and jointed components are entered to the pressing section, where they are pressed with rotating rollers, through which they are permanently joined. The pressure of the rollers is 4 to 6 bar. The rollers are heated, and their temperature is adjusted so that the mutual correlation of rotational speed and the temperature of the rollers leads to heating the heated and pressed material up to at least 100°C.

The effect of a process conducted in this manner is layered material for manufacturing advertising stands in the form of panels consisting of four rigid elements (panels) 1, 1', 2 and 2', joined with reinforcing fabric 3 and flexible resin. The apertures 4 created in between vertical panel pairs allow for bending the opposite rigid elements. Elements of advertising stands and connectors of desired shape are then cut out of layered material for manufacturing advertising stands, produced in this manner.

The layered material for manufacturing advertising stands according to the invention has the form of laminate and comprises rigid panels connected with reinforcing fabric and flexible resin. Preferably, the layered material for manufacturing advertising stands may also take the form of at least two panels jointed with the connecting reinforcing fabric. When the stand cannot be designed using one multiple-joint element, then several elements joined with connectors must be used. At least one edge of the rigid board is equipped with at least one socket 5 for the connector 6. The connector 6 socket 5 is trapezoid as to correspond to the shape of the external edges of the connector 6 in such a way that, when pulled out of the socket along the rigid panel, the connector 6 is locked.

The connector 6 from layered material for manufacturing advertising stands shaped in a form close to two trapezoids directed towards one another with their shorter bases, and their sharp-angled corners are rounded. The resulting connector 6 from layered material for manufacturing advertising stands has the form of laminate and comprises rigid panels, joined in pairs above and under reinforcing fabric 3 soaked with flexible resin, with an aperture between the facing edges of trapezoid panels of the thickness of two panels and their binding interlayer of reinforcing fabric soaked with flexible resin.

## Claims

1. The manner of production of layered material for manufacturing advertising stands, **characterized in that** at least two rigid, symmetrical, elements (1) and (2) and highly durable aramid reinforcing fabric (3) soaked with flexible resin are permanently connected under a pressure of 4-6 bar and simultaneously the rigid and symmetrical elements and the fabric (3) soaked with resin is heated to at least 100°C for at least 25 minutes.

2. The manner as per claim 1 **characterized in that** the flexible resin is polyurethane, silicone or rubber.

3. The manner as per claim 2 or 3 **characterized in that** reinforcing fabric (3) is soaked with resin in the amount corresponding to the fabric weight, counted in g per m² of fabric (3) surface.

4. The manner as per claim 1, 2 or 3 **characterized in that** the rigid and symmetrical panels (1) and (2) are made of aluminum, steel sheet metal or rigid plastic, or a wood-based agglomerated material, and their surface is notched, creating apertures or perforations

5. The manner as per claim 4 **characterized in that** the rigid and symmetrical elements (1) and (2) have the form of tape (1), (1'), (2) i (2').

6. The manner as per claim 1, 2, 3 or 4 **characterized in that** the rigid and symmetrical elements reinforcing fabric (3) soaked with resin are joined so that the notches and perforations (4) of the surfaces of the rigid panels (1) and (2) are located opposite one another (overlapping).

7. The manner as per claim 1, 2, 3, 4 or 6 **characterized in that** joining the rigid panels (1) and (2) and reinforcing fabric (3) is carried out in vacuum and the joined rigid panels (1) and (2) and the resin-soaked fabric are sealed in a bag made of durable foil or silicone plates and placed in an autoclave, where air is firstly removed from the space inside and outside the bag using vacuum, and then the external space surrounding the product is filled with compressed air to produce 4 to 6 bar pressure.

8. The manner as per claim 1, 2, 3, 4, 5 or 6 **characterized in that** rigid panels (1) and (2) and the reinforcing fabric (3) soaked with resin are heated under pressure to at least 100°C for at least 25 minutes.

9. The manner as per claim 1, 2, 3, 4 or 5 **characterized in that** four tapes (1), (1'), (2), (2') and very durable reinforcing fabric (3) soaked with flexible resin are unrolled from rollers, joined, rolled and simultaneously heated to a temperature equal or exceeding 100°C.

10. The manner as per claim 9 **characterized in that** the tapes (1), (1'), (2), (2') are laid in pairs so that each pair is laid symmetrically, one atop another, forming an aperture of the thickness of two panels and their binding interlayer.

11. The manner as per claim 1, 2, 3, 4, 5, 6, 7, 8, 9 or 10 **characterized in that** the resulting layered material for manufacturing advertising stands is used to produce connectors (6).

12. The manner as per claim 11 **characterized in that** the connectors (6) have the form close to two trapezoids directed towards one another with their shorter bases, and comprise four rigid panels laid in pairs, one atop another and joined with reinforcing fabric soaked with flexible resin and the aperture formed between the panels is of the thickness of two panels and their binding interlayer.

13. The manner as per claim 11 and 12 **characterized in that** the connectors (6) from layered material are placed in the edge of the layered material obtained in a manner according to the invention, in which connector (6) sockets (5) are cut out through milling from a rigid panel with the manual milling machine in a single milling performed along the line resembling a trapezoid with rounded corners.

14. The manner as per claim 13 **characterized in that** the resulting edge of milling of at least one rigid panel corresponds to the shape of the external trapezoid connector (6) panel form.

15. The manner as per claim 13 or 14 **characterized in that** the depth of milling corresponds to the depth of the connector.

16. Layered material for manufacturing advertising stands **characterized in that** it contains at least two rigid, symmetrical, elements (1) and (2) are permanently connected with highly durable aramid reinforcing fabric (3) soaked with flexible resin in the amount corresponding to the fabric weight, counted in g per m² of fabric surface.

17. The connector from layered material for manufacturing advertising stands **characterized in that** it contains at least four rigid panels (1), (1'), (2), (2') are laid in pairs above and under reinforcing fabric soaked with flexible resin, with an aperture between the facing edges of trapezoid panels of the thickness of two panels (1), (1') or (2), (2')and their binding interlayer of reinforcing fabric (3) soaked with flexible resin.
